# EUROPÄISCHE PATENTSCHRIFT

(11) **EP 4 237 990 B1**
(45) Veröffentlichungstag und Bekanntmachung des Hinweises auf die Patenterteilung: **03.06.2026**
(21) Anmeldenummer: 21773393.0
(22) Anmeldetag: 08.09.2021
(51) Int. Cl.: G06V 10/50, G06V 20/56, G06V 10/30, G01S 17/00

(54) **VERFAHREN UND VORRICHTUNG ZUM ERKENNEN VON BLOOMING-KANDIDATEN IN EINER LIDARMESSUNG**
METHOD AND DEVICE FOR IDENTIFYING BLOOMING CANDIDATES IN A LIDAR MEASUREMENT
PROCÉDÉ ET DISPOSITIF D'IDENTIFICATION DE CANDIDATS D'EFFLORESCENCE DANS UNE MESURE LIDAR

(30) Priorität: 02.11.2020 DE 102020128732
(43) Veröffentlichungstag der Anmeldung: 06.09.2023
(73) Patentinhaber: Mercedes-Benz Group AG, 70372 Stuttgart (DE)
(72) Erfinder: PETER, David, 70195 Stuttgart (DE); PFENDER, Matthias, 71364 Winnenden (DE); ENZWEILER, Markus, 75392 Deckenpfronn (DE); BÜTTNER, Axel, 70195 Stuttgart (DE); LEHNER, Philipp, 75417 Mühlacker (DE)
(74) Vertreter: Liedtke & Partner Patentanwälte
(86) Internationale Anmeldenummer: PCT/EP2021/074677
(87) Internationale Veröffentlichungsnummer: WO 2022/089819

(56) Entgegenhaltungen:
- DE-T5- 112018 004 891
- HOEGG THOMAS ET AL: "Time-of-Flight camera based 3D point cloud reconstruction of a car", COMPUTERS IN INDUSTRY, ELSEVIER, AMSTERDAM, NL, vol. 64, no. 9, 31 July 2013 (2013-07-31), pages 1099 - 1114, XP028768005, ISSN: 0166-3615, DOI: 10.1016/J.COMPIND.2013.06.002

## Beschreibung

Die Erfindung betrifft ein Verfahren zum Erkennen von Blooming-Kandidaten in einer Lidarmessung.

Die Erfindung betrifft weiterhin eine Vorrichtung zum Erkennen von Blooming-Kandidaten in einer Lidarmessung und eine Verwendung des Verfahrens.

Aus der DE 10 2005 003 970 A1 ist ein Verfahren zur Bestimmung einer Funktionsfähigkeit einer Sensoranordnung an einem Kraftfahrzeug bekannt, wobei ein von der Sensoranordnung erfasster Bereich in verschiedene Unterbereiche unterteilt ist und einem Unterbereich zugeordnete Sensorsignale aus einem bestimmten Umgebungsbereich zur Bestimmung der Funktionsfähigkeit der Sensoranordnung ausgewertet werden. Dabei werden Sensorsignale ausgewertet, die nacheinander für verschiedene Unterbereiche bei einer Vorbeifahrt an dem bestimmten Umgebungsbereich erfasst werden. Bei den Unterbereichen handelt es sich um Erfassungsbereiche verschiedener Lidarsensoren oder um verschiedene Winkelsektoren eines Lidarsensors.

Weiterhin ist aus der DE 10 2018 003 593 A1 ein Verfahren zum Betrieb eines Assistenzsystems eines Fahrzeugs bekannt, bei dem mittels des Assistenzsystems das Fahrzeug im autonomen Fahrbetrieb bewegt wird und das Assistenzsystem eine Umgebungssensorik mit einer Anzahl von im und/oder am Fahrzeug angeordneten Erfassungseinheiten umfasst. Mittels der Erfassungseinheiten werden im autonomen Fahrbetrieb des Fahrzeugs eine Umgebung des Fahrzeuges und sich in dieser befindende Objekte erfasst, wobei mittels eines Überwachungsmoduls eine Funktion der einzelnen Erfassungseinheiten fortlaufend überwacht wird und bei einem Ausfall einer Erfassungseinheit ausschließlich eine mit dieser ausgefallenen Erfassungseinheit verbundene Assistenzfunktion mittels eines mit dem Überwachungsmodul verbundenen Planungsmoduls deaktiviert wird. Die Erfassungseinheiten umfassen einen lidarbasierten Sensor.

Die nicht veröffentliche DE 10 2020 110 809.5 beschreibt eine Vorrichtung und ein Verfahren zum Erkennen von Blooming in einer Lidarmessung, wobei ein Abstand zu einem Lidarreflexionspunkt in einer aktiven Messung und einer passiven Messung ermittelt wird. Dabei wird ein erster Abstandswert in der aktiven Messung basierend auf einer Signallaufzeit eines Laserimpulses ermittelt. Weiterhin wird ein zweiter Abstandswert in der passiven Messung basierend auf einer Triangulation von aus unterschiedlichen Messpositionen durchgeführten zweidimensionalen Intensitätsmessungen ermittelt. Es wird dann auf Blooming geschlossen, wenn der zweite Abstandswert den ersten Abstandswert um ein vorgegebenes Maß überschreitet.

Aus "Kaszubiak, Jens; [et al.]. Real-time vehicle and lane detection with embedded hardware. In: IEEE Proceedings. Intelligent Vehicles Symposium, 2005. IEEE, 2005. Seiten 619 bis 624" ist ein Verfahren zur Erfassung einer Fahrzeugumgebung mittels einer Stereokamera bekannt.

Weiterhin beschreibt die US 2019/0391270 A1 eine Vorrichtung und ein Verfahren zur Verringerung von Einflüssen hochreflektiver Objekte in Lidardaten.

Aus der DE 11 2018 004 891 T5 ist eine Bildverarbeitungseinrichtung bekannt, aufweisend:
- einen Abstandsbild-Erfassungsabschnitt, der dazu ausgebildet ist, ein Abstandsbild mit einem Pixelwert zu erfassen, der einem Abstand zu einem bildlich erfassten Objekt entspricht;
- einen Intensitätsbild-Erfassungsabschnitt, der dazu ausgebildet ist, ein Intensitätsbild mit einem Pixelwert zu erfassen, der einer empfangenen Intensität des reflektierten Lichts von projiziertem Licht von dem Objekt entspricht;
- einen Rauschentfernungsabschnitt, der dazu ausgebildet ist, einen Pixelwert eines Pixels in dem Abstandsbild, das einem Pixel mit einem Pixelwert kleiner als eine vorbestimmte Schwelle in dem Intensitätsbild entspricht, in einen vorbestimmten Pixelwert umzuwandeln;
- einen Schwellenbestimmungsabschnitt, der dazu ausgebildet ist, ein Histogramm des Pixelwertes des Intensitätsbildes zu erzeugen und einen Pixelwert, der als ein Änderungspunkt in dem Histogramm dient, als die vorbestimmte Schwelle zu bestimmen; und
- einen Filterverarbeitungsabschnitt, der dazu ausgebildet ist, an dem Intensitätsbild eine Verarbeitung unter Verwendung eines vorbestimmten Filters zum Entfernen von Rauschen durchzuführen.

Der Erfindung liegt die Aufgabe zu Grunde, ein neuartiges Verfahren und eine neuartige Vorrichtung zum Erkennen von Blooming-Kandidaten in einer Lidarmessung sowie eine Verwendung eines solchen Verfahrens anzugeben.

Die Aufgabe wird erfindungsgemäß gelöst durch ein Verfahren, welches die im Anspruch 1 angegebenen Merkmale aufweist, durch eine Vorrichtung, welche die im Anspruch 6 angegebenen Merkmale aufweist, und durch eine Verwendung, welche die im Anspruch 9 angegebenen Merkmale aufweist.

Vorteilhafte Ausgestaltungen der Erfindung sind Gegenstand der Unteransprüche.

In dem Verfahren zum Erkennen von Blooming-Kandidaten in einer Lidarmessung wird erfindungsgemäß ein distanzbasiertes Histogramm von Punkten einer in der Lidarmessung erzeugten Punktewolke erstellt. In dem Histogramm werden Häufungen von Punkten mit gleicher Distanz zu einem die Lidarmessung durchführenden Lidarsensor identifiziert und Intensitäten der Punkte einer Häufung, insbesondere einer jeweiligen Häufung, werden ausgewertet. Wenn die Häufung Punkte enthält, deren Intensitäten einen vorgegebenen Grenzwert jeweils überschreiten, werden diejenigen Punkte der Häufung, deren Intensitäten den vorgegebenen Grenzwert jeweils um mehr als einen vorgegebenen Schwellwert unterschreiten, als Blooming-Kandidaten klassifiziert. In einer möglichen Ausgestaltung des Verfahrens werden diejenigen Punkte der Häufung, deren Intensitäten den vorgegebenen Grenzwert jeweils überschreiten, als hochreflektive Messwerte, insbesondere als richtig-positive Messwerte, klassifiziert.

Unter Blooming wird dabei vorliegend eine Überstrahlung oder ein Übersprechen in einer Lidarmessung verstanden. Das Blooming tritt beispielsweise auf, wenn ein von einem Lidar emittierter Laserpuls von einem stark reflektierenden Ziel, beispielsweise einem Verkehrszeichen oder einem Scheinwerferreflektor, insbesondere als Retroreflektor ausgebildeten Ziel, reflektiert wird. In diesem Fall wird im Vergleich zu weniger reflektierenden Zielen eine große Menge von emittierter Energie an das Lidar zurückgesendet. Der dabei zurückgesendete Lichtstrahl ist normalerweise nicht optimal fokussiert. Die Gründe dafür sind vielfältig, häufig ist es so, dass die Reflexion vom Ziel normalerweise nicht optimal spiegelnd ist, Partikel in der Atmosphäre den Laserstrahl ablenken oder Verschmutzungen auf einer Abdeckung des Lidars eine Lichtstreuung verursachen. Dies kann dazu führen, dass zurückgesendetes Licht auf mehrere räumlich nah zueinander angeordnete Empfängerzellen des Lidars trifft bzw. das zurückgesendete Licht auf benachbarte Pixel übergeht. Daraus resultiert, dass - abhängig von einer Empfindlichkeit des Detektors - eine Entfernungsmessung ausgelöst wird. Bloomingeffekte sind dabei normalerweise bei kürzeren Entfernungen vom Lidar stärker, da die von einem Ziel reflektierte Energiemenge mit zunehmender Entfernung, die das Licht zurücklegen muss, schnell abnimmt.

Lidare spielen eine wichtige Rolle in Fahrerassistenzsystemen und anderen automatisiert betriebenen Plattformen, beispielsweise Robotern, da sie eine genaue dreidimensionale Darstellung einer Umgebung des Lidars ermöglichen. Beim Auftreten des Blooming kann es jedoch zu falschen Ergebnissen bei einer Messung von Entfernungen zwischen dem Lidar und in dessen Umgebung erfassten Objekten kommen. Insbesondere können aufgrund von Blooming-Effekten falsch-positive Lidarmessungen entstehen, so dass die genaue dreidimensionale Darstellung der Umgebung erschwert wird.

Mittels des Verfahrens ist in einfacher Weise eine zuverlässige Erkennung von Blooming-Kandidaten in Lidarmessungen möglich, so dass falsche Ergebnisse in solchen Entfernungsmessungen vermieden oder zumindest sicher erkannt werden können und die Blooming-Kandidaten beispielsweise in nachgelagerten Softwaremodulen entsprechend als solche behandelt werden können. Hieraus resultiert ein sicherer Betrieb von Anwendungen, beispielsweise automatisiert, insbesondere hochautomatisiert oder autonom fahrenden oder bewegten Fahrzeugen und Robotern.

Somit kann beispielsweise bei einer Verwendung des Verfahrens während eines Betriebs eines automatisiert, insbesondere hochautomatisiert oder autonom betreibbaren Fahrzeugs oder Roboters die Gefahr minimiert werden, dass in einer weitergehenden Datenverarbeitung, beispielsweise einer Sensor-Fusion, davon ausgegangen wird, dass sich an Positionen, an welchen Blooming auftritt, ein Hindernis, wie beispielsweise ein Stau-Ende, befindet.

Insbesondere erfolgt in einer solchen Verwendung des Verfahrens während eines Betriebs eines automatisiert betreibbaren Fahrzeugs oder Roboters eine Steuerung des Fahrzeugs oder Roboters anhand von in Lidarmessungen erfassten Daten, wobei bei der Durchführung mittels des Verfahrens als Blooming-Kandidaten klassifizierte Punkte berücksichtigt werden. Beispielsweise fließen dabei Ergebnisse des Verfahrens in einen Algorithmus ein, in welchem entschieden wird, ob es sich bei einem erfassten Punkt um ein Objekt oder eine aus Blooming resultierende Messung handelt.

Beispielsweise aus dem Auftreten von Blooming folgende, von einem Fahrerassistenzsystem gegebenenfalls ungewollt eingeleitete Bremsungen, Lenkeingriffe und/oder andere Maßnahmen können so sicher vermieden werden. Auch kann eine Verdeckung von wirklichen Hindernissen durch Blooming-Kandidaten sicher erkannt werden.

In einer weiteren möglichen Ausgestaltung des Verfahrens werden zur Erzeugung der Punktewolke mittels eines Senders des Lidarsensors linienförmige Laserpulse und/oder rechteckförmige Laserpulse ausgesendet. Hierdurch kann eine besonders große räumliche Auflösung bei gleichzeitig besonders geringer Scanzeit des Lidarsensors erreicht werden. Für jeden an einem Objekt reflektierten Laserpuls, welcher auf einen Empfänger des Lidarsensors trifft, wird ein Punkt in der Punktewolke erzeugt, wobei zur Ermittlung einer Distanz zu Objekten wird in einer Umgebung des Lidarsensors eine Zeit erfasst wird, bis ein reflektierter Laserpuls auf einen Empfänger des Lidarsensors trifft, und jedem Punkt ein Wert einer ermittelten Distanz zugeordnet wird.

In einer weiteren möglichen Ausgestaltung des Verfahrens wird mittels der Laserpulse die Umgebung zeilenförmig, spaltenförmig und/oder in mehrere Teilbereiche aufgeteilt abgetastet. Dies ermöglicht eine zuverlässige und exakte Erfassung und Abbildung einer Umgebung des Lidarsensors.

Um eine Genauigkeit der Erfassung und Abbildung der Umgebung des Lidarsensors weiter zu erhöhen, wird in einer weiteren möglichen Ausgestaltung des Verfahrens die Umgebung des Lidarsensors in mehrere Teilbereiche aufgeteilt und für jeden Teilbereich wird zumindest ein distanzbasiertes Histogramm von Punkten einer in der Lidarmessung erzeugten Punktewolke erstellt.

Die Vorrichtung zum Erkennen von Blooming-Kandidaten in einer Lidarmessung umfasst erfindungsgemäß eine Verarbeitungseinheit, welche ausgebildet ist, ein distanzbasiertes Histogramm von Punkten einer in der Lidarmessung erzeugten Punktewolke zu erstellen, in dem Histogramm Häufungen von Punkten mit gleicher Distanz zu einem die Lidarmessung durchführenden Lidarsensor zu identifizieren, Intensitäten der Punkte einer Häufung, insbesondere einer jeweiligen Häufung, auszuwerten, und dann, wenn die Häufung Punkte enthält, deren Intensitäten einen vorgegebenen Grenzwert jeweils überschreiten, diejenigen Punkte der Häufung, deren Intensitäten den vorgegebenen Grenzwert jeweils um mehr als einen vorgegebenen Schwellwert unterschreiten, als Blooming-Kandidaten zu klassifizieren. In einer möglichen Ausgestaltung der Vorrichtung ist die Verarbeitungseinheit ausgebildet, diejenigen Punkte der Häufung, deren Intensitäten den vorgegebenen Grenzwert jeweils überschreiten, als hochreflektive Messwerte, insbesondere als richtig-positive Messwerte, zu klassifizieren.

Mittels der Vorrichtung ist in einfacher Weise eine zuverlässige Erkennung von Blooming-Kandidaten in Lidarmessungen möglich, so dass falsche Ergebnisse in solchen Entfernungsmessungen vermieden oder zumindest sicher erkannt werden können und die Blooming-Kandidaten beispielsweise in nachgelagerten Softwaremodulen entsprechend als solche behandelt werden können. Hieraus resultiert ein sicherer Betrieb von Anwendungen, beispielsweise automatisiert, insbesondere hochautomatisiert oder autonom fahrenden oder bewegten Fahrzeugen und Robotern.

Somit kann beispielsweise bei einer Verwendung der Vorrichtung während eines Betriebs eines automatisiert, insbesondere hochautomatisiert oder autonom betreibbaren Fahrzeugs oder Roboters die Gefahr minimiert werden, dass in einer weitergehenden Datenverarbeitung, beispielsweise einer Sensor-Fusion, davon ausgegangen wird, dass sich an Positionen, an welchen Blooming auftritt, ein Hindernis, wie beispielsweise ein Stau-Ende, befindet. Beispielsweise daraus folgende, von einem Fahrerassistenzsystem gegebenenfalls ungewollte Bremsungen, können so sicher vermieden werden. Auch kann eine Verdeckung von wirklichen Hindernissen durch Blooming-Kandidaten sicher erkannt werden.

In einer weiteren möglichen Ausgestaltung der Vorrichtung umfasst der Lidarsensor zumindest einen rasterbasierten Empfänger, um eine besonders große räumliche Auflösung bei gleichzeitig besonders geringer Scanzeit des Lidarsensors zu ermöglichen.

Ausführungsbeispiele der Erfindung werden im Folgenden anhand einer Zeichnung näher erläutert.

Dabei zeigt:

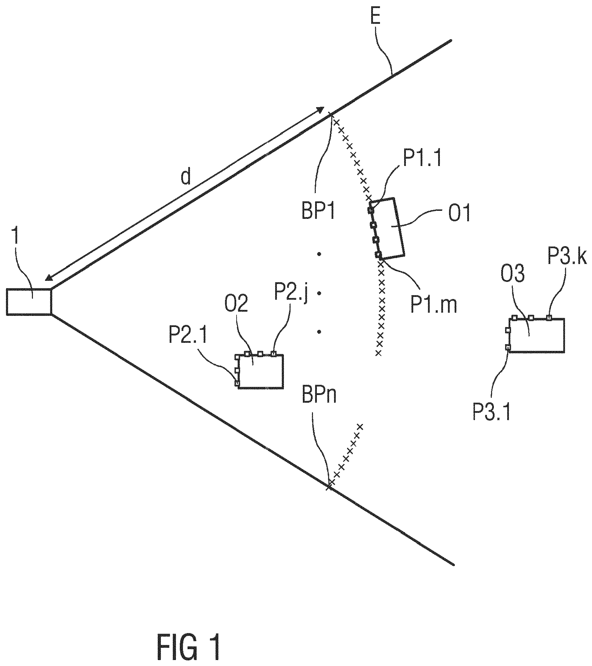

- Fig. 1: schematisch einen Lidarsensor mit einem Erfassungsbereich und in dem Erfassungsbereich befindliche Objekte.

In der einzigen Figur 1 sind ein Lidarsensor 1 und eine von dem Lidarsensor 1 überwachte Umgebung in einer Ansicht von oben dargestellt.

Innerhalb der Umgebung des Lidarsensors 1 befinden sich drei Objekte O1 bis O3, welche vom Lidarsensor 1 innerhalb eines Erfassungsbereichs E erfasst werden.

Der Lidarsensor 1 ist beispielsweise an einem automatisiert, insbesondere hochautomatisiert oder autonom fahrenden Fahrzeug angeordnet. Der Lidarsensor 1 kann alternativ auch an einem Roboter angeordnet sein.

Bei dem ersten Objekt O1 handelt es sich um ein hochreflektives Objekt O1, beispielsweise ein retroreflektives Verkehrszeichen oder ein Nummernschild eines Fahrzeugs. Das zweite Objekt O2 und das dritte Objekt O3 weisen jeweils eine geringe Reflektivität auf.

Mittels des Lidarsensors 1 werden Entfernungen zu Objekten O1 bis O3 in dessen Umgebung ermittelt, indem Laserpulse ausgesendet werden und eine Zeit erfasst wird, bis ein reflektierter Laserpuls auf einen insbesondere rasterförmig ausgebildeten Empfänger des Lidarsensors 1 trifft. Dabei kann der Lidarsensor 1 mehrere als Laser ausgebildete Sender und/oder mehrere Empfänger umfassen, um eine Messrate und eine räumliche Auflösung des Lidarsensors 1 zu erhöhen. Dabei kann eine mittels des Lidarsensors 1 ausgeführte Messung, auch als Scan bezeichnet, derart ausgeführt werden, dass ein vollständiger Scan als zweidimensionales Messraster, auch als Lidarbild bezeichnet, interpretiert werden kann.

Insbesondere werden zur Erzeugung einer Punktewolke mittels des Senders des Lidarsensors 1 linienförmige Laserpulse und/oder rechteckförmige Laserpulse ausgesendet. Insbesondere wird mittels der Laserpulse die Umgebung zeilenförmig, spaltenförmig und/oder in mehrere Teilbereiche aufgeteilt abgetastet.

Für jeden an einem Objekt O1 bis O3 reflektierten Laserpuls, welcher auf den Empfänger des Lidarsensors trifft, wird ein Punkt P1.1 bis P1.m, P2.1 bis P2.j, P3.1 bis P3.k in der Punktewolke erzeugt, wobei zur Ermittlung der Distanz zu den Objekten O1 bis O3 in der Umgebung des Lidarsensors die Zeit erfasst wird, bis der reflektierte Laserpuls auf den Empfänger des Lidarsensors trifft. Anschließend wird jedem Punkt ein Wert einer ermittelten Distanz zugeordnet. Die gezeigten Punkte P1.1 bis P1.m, P2.1 bis P2.j, P3.1 bis P3.k, welche unmittelbar auf den Objekten O1 bis O3 liegen, stellen dabei richtig-positive Messungen dar. Diese Punkte P1.1 bis P1.m, P2.1 bis P2.j, P3.1 bis P3.k sind in der Figur 1 als kleine Vierecke dargestellt. D ie Punkte P3.1 bis P3.k, welche dem dritten Objekt O3 zugehörig sind, sind aufgrund von dessen Lage Messpunkte zweiter Ordnung.

In der dargestellten Umgebung des Lidarsensors 1 erzeugt das erste Objekt O1 aufgrund seiner hohen Reflektivität während der Lasermessung als Blooming-Punkte ausgebildete Punkte BP1 bis BPn seitlich sowie über- und unterhalb des Objekts O1 in gleicher Distanz zum Lidarsensor 1, so dass ein so genanntes Blooming-Artefakt entsteht. Diese Punkte BP1 bis BPn sind in der Figur 1 als Kreuzchen dargestellt. Diese
Punkte BP1 bis BPn sind halbkreisförmig um das Objekt O1 in gleicher Distanz zum Lidarsensor 1 verteilt. Falls diese als Blooming-Punkte ausgebildeten Punkte BP1 bis BPn nicht als solche detektiert werden, besteht die Gefahr, dass in einer weitergehenden Datenverarbeitung, beispielsweise einer Sensor-Fusion, davon ausgegangen wird, dass sich dort ein Hindernis, beispielsweise ein Stau-Ende befindet, so dass von einem Fahrerassistenzsystem gegebenenfalls eine ungewollte Bremsung ausgelöst wird. Auch können reale Hindernisse, wie beispielsweise das Objekt O3, durch solche Blooming-Artefakte verdeckt werden, so dass diese in den Lidarmessungen nicht erkannt werden. Die als Blooming-Punkte ausgebildeten Punkte BP1 bis BPn stellen dabei falsch-positive Messungen dar.

Um diese als Blooming-Punkte ausgebildeten Punkte BP1 bis BPn sicher zu detektieren, ist vorgesehen, ein distanzbasiertes Histogramm, auch als range-based Histogramm bezeichnet, von Punkten P1.1 bis P1.m, P2.1 bis P2.j, P3.1 bis P3.k, BP1 bis BPn der in der Lidarmessung erzeugten Punktewolke zu erstellen. Ein distanzbasiertes Histogramm ist dabei ein Histogramm, das aufzeigt, wie viele
Punkte P1.1 bis P1.m, P2.1 bis P2.j, P3.1 bis P3.k, BP1 bis BPn bei welcher Distanz erfasst werden. Zur Histogrammerstellung kann die Umgebung des Lidarsensors 1 in mehrere Teilbereiche aufgeteilt werden und für jeden Teilbereich zumindest ein distanzbasiertes Histogramm von Punkten P1.1 bis P1.m, P2.1 bis P2.j, P3.1 bis P3.k, BP1 bis BPn der in der Lidarmessung erzeugten Punktewolke erstellt werden.

Dabei können aus den mittels des Lidarsensors 1 erfassten Daten zwei Merkmale pro Punkt P1.1 bis P1.m, P2.1 bis P2.j, P3.1 bis P3.k, BP1 bis BPn ermittelt werden. Dies ist die Distanz des jeweiligen Punktes P1.1 bis P1.m, P2.1 bis P2.j, P3.1 bis P3.k, BP1 bis BPn zum Lidarsensor 1, wie zuvor bereits beschrieben, und eine gemessene Intensität des jeweiligen Punktes P1.1 bis P1.m, P2.1 bis P2.j, P3.1 bis P3.k, BP1 bis BPn, d. h. welche Lichtmenge vom Objekt O1 bis O3 am jeweiligen Punkt P1.1 bis P1.m, P2.1 bis P2.j, P3.1 bis P3.k, BP1 bis BPn zum Empfänger des Lidarsensors 1 zurückgesendet wird.

Anhand des Merkmals der Intensität können aus der Menge der gleich weit entfernten Punkte P1.1 bis P1.m und BP1 bis BPn die Punkte P1.1 bis P1.m von den als Blooming-Punkte ausgebildeten Punkten BP1 bis BPn unterschieden werden, da vom Objekt O1, das heißt von den Punkten P1.1 bis P1.m eine große Menge von Licht mit hoher Intensität zurück an den Empfänger reflektiert wird. Die falsch-positiven Messungen durch den Blooming Effekt an den Punkten BP1 bis BPn werden dagegen durch Streulicht im Objektiv des Lidarsensors 1 an dessen Empfänger erzeugt. Die Intensität ist dabei typischerweise um mehrere Größenordnungen kleiner als die Intensität der Punkte P1.1 bis P1.m.

Das distanzbasierte Histogramm wird dabei erzeugt, indem Lidarmessungen innerhalb einer Spalte in das Histogramm eingefügt werden. Falls es zu Blooming-Effekten kommt, wird eine sehr hohe Anzahl an Punkten in exakt der gleichen Distanz erwartet, hier die Punkte P1.1 bis P1.m und BP1 bis BPn in der Distanz d. Dies führt dann dazu, dass es zu einem hohen Ausschlag innerhalb eines Histogramm-Bins kommt. Dass diese Messungen von einem realen Objekt O1 bis O3 stammen, ist sehr unwahrscheinlich, da sich der Lidarsensor 1 sonst in einer übergroßen Kugel befinden müsste, um ein entsprechendes Signal zurückzuliefern. Wenn gleichzeitig in diesen Messungen hohe Intensitätswerte im gleichen Bin des Histogramms, das heißt bei vielen Punkten P1.1 bis P1.m, BP1 bis BPn in der gleichen Distanz zum Lidarsensor 1, liegen, kann sicher von einem Bloomingeffekt ausgegangen werden.

Aus diesem Grund werden in dem Histogramm Häufungen der Punkte P1.1 bis P1.m, P2.1 bis P2.j, P3.1 bis P3.k, BP1 bis BPn mit gleicher Distanz zu dem die Lidarmessung durchführenden Lidarsensor 1 identifiziert. Im vorliegenden Fall wird eine Häufung von Punkten mit der Distanz d identifiziert, nämlich die
Punkte P1.1 bis P1.m und BP1 bis BPn. Zusätzlich werden die Intensitäten dieser Punkte P1.1 bis P1.m und BP1 bis BPn ausgewertet. Wenn die Auswertung der Intensitäten ergibt, dass diese Häufung Punkte enthält, deren Intensitäten jeweils einen vorgegebenen Grenzwert überschreiten, wird auf einen Blooming-Effekt geschlossen, weil Blooming bei hochreflektiven Objekten auftritt und hohe Intensitäten ein Indiz für ein hochreflektives Objekt sind. Alle diejenigen Punkte dieser Häufung, deren Intensitäten den vorgegebenen Grenzwert jeweils überschreiten, hier die Punkte P1.1 bis P1.m, werden als hochreflektive Messwerte, insbesondere als richtig-positive Messwerte klassifiziert. Alle diejenigen Punkte der Häufung, deren Intensitäten den vorgegebenen

Grenzwert jeweils um mehr als einen vorgegebenen Schwellwert, unterschreiten, werden als Blooming-Kandidaten klassifiziert. Vorliegend sind das die Punkte BP1 bis BPn.

In einer möglichen Ausgestaltung können nachgelagerte Algorithmen in einer Sensor-Fusion die gewonnenen Informationen entsprechend verarbeiten. Durch eine Verwendung von mittels weiterer Sensoren, beispielsweise Lidarsensoren an anderen Positionen, Kameras oder Radarsensoren, ermittelten weiteren Informationen können die mittels Messungen des Lidarsensors 1 gewonnenen Informationen plausibilisiert und/oder ergänzt werden.

Beispielsweise fließen dabei die Ergebnisse über die Blooming-Kandidaten in einen Algorithmus ein, in welchem entschieden wird, ob es sich bei einem erfassten Punkt P1.1 bis P1.m, P2.1 bis P2.j, P3.1 bis P3.k, BP1 bis BPn um ein Objekt O1 bis O3 oder eine aus Blooming resultierende Messung handelt.

Wird in der Lidarmessung eine aus dem Auftreten von Blooming resultierende Messung erkannt, werden vom Fahrerassistenzsystem bei Vorliegen eines realen Objekts O1 bis O3 beispielsweise durchgeführte Bremsungen, Lenkeingriffe und/oder andere Maßnahmen nicht durchgeführt und somit eine daraus resultierende Gefährung von Fahrzeuginsassen und anderer Verkehrsteilnehmer verringert.

Auch ist es möglich, dass dann, wenn in der Lidarmessung eine aus dem Auftreten von Blooming resultierende Messung erkannt wird, eine Verdeckung von wirklichen Hindernissen durch Blooming-Kandidaten sicher erkannt wird. Bei einer Erkennung einer solchen Verdeckung kann dagegen ein Unterlassen einer automatischen Durchführung von Bremsungen, Lenkeingriffen und/oder anderen Maßnahmen mittels eines Fahrerassistenzsystems wirkungsvoll vermieden werden, so dass eine Gefährdung von Fahrzeuginsassen und anderer Verkehrsteilnehmer weiter verringert wird.

### Bezugszeichenliste

- 1: Lidarsensor
- BP1 bis BPn: Punkt
- d: Distanz
- E: Erfassungsbereich
- O1 bis O3: Objekt
- P1.1 bis P1.m: Punkt
- P2.1 bis P2.j: Punkt
- P3.1 bis P3.k: Punkt

## Patentansprüche

1. Verfahren zum Erkennen von Blooming-Kandidaten in einer Lidarmessung,
**dadurch gekennzeichnet, dass**
- ein distanzbasiertes Histogramm von
Punkten (P1.1 bis P1.m, P2.1 bis P2.j, P3.1 bis P3.k, BP1 bis BPn) einer in der Lidarmessung erzeugten Punktewolke erstellt wird,
- in dem Histogramm Häufungen von Punkten (P1.1 bis P1.m, BP1 bis BPn) mit gleicher Distanz zu einem die Lidarmessung durchführenden Lidarsensor (1) identifiziert werden,
- Intensitäten der Punkte (P1.1 bis P1.m, BP1 bis BPn) einer Häufung ausgewertet werden, und
- dann, wenn die Häufung Punkte (P1.1 bis P1.m) enthält, deren Intensitäten einen vorgegebenen Grenzwert jeweils überschreiten, diejenigen Punkte (BP1 bis BPn) der Häufung, deren Intensitäten den vorgegebenen Grenzwert jeweils um mehr als einen vorgegebenen Schwellwert unterschreiten, als Blooming-Kandidaten klassifiziert werden.

2. Verfahren nach Anspruch 1,
**dadurch gekennzeichnet, dass** diejenigen Punkte (P1.1 bis P1.m) der Häufung, deren Intensitäten den vorgegebenen Grenzwert jeweils überschreiten, als hochreflektive Messwerte, insbesondere als richtig-positive Messwerte, klassifiziert werden.

3. Verfahren nach einem der vorhergehenden Ansprüche,
**dadurch gekennzeichnet, dass** zur Erzeugung der Punktewolke
- mittels eines Senders des Lidarsensors (1) linienförmige Laserpulse und/oder rechteckförmige Laserpulse ausgesendet werden,
- für jeden an einem Objekt (O1 bis O3) reflektierten Laserpuls, welcher auf einen Empfänger des Lidarsensors (1) trifft, ein
Punkt (P1.1 bis P1.m, P2.1 bis P2.j, P3.1 bis P3.k, BP1 bis BPn) in der Punktewolke erzeugt wird,
- zur Ermittlung einer Distanz zu Objekten (O1 bis O3) in einer Umgebung des Lidarsensors (1) eine Zeit erfasst wird, bis ein reflektierter Laserpuls auf einen Empfänger des Lidarsensors (1) trifft, und
- jedem Punkt (P1.1 bis P1.m, P2.1 bis P2.j, P3.1 bis P3.k BP1 bis BPn) ein Wert einer ermittelten Distanz zugeordnet wird.

4. Verfahren nach Anspruch 3,
**dadurch gekennzeichnet, dass** mittels der Laserpulse die Umgebung zeilenförmig, spaltenförmig und/oder in mehrere Teilbereiche aufgeteilt abgetastet wird.

5. Verfahren nach einem der vorhergehenden Ansprüche,
**dadurch gekennzeichnet, dass** die Umgebung des Lidarsensors (1) in mehrere Teilbereiche aufgeteilt wird und für jeden Teilbereich zumindest ein distanzbasiertes Histogramm von Punkten (P1.1 bis P1.m, P2.1 bis P2.j, P3.1 bis P3.k, BP1 bis BPn) einer in der Lidarmessung erzeugten Punktewolke erstellt wird.

6. Vorrichtung zum Erkennen von Blooming-Kandidaten in einer Lidarmessung, **gekennzeichnet durch** eine Verarbeitungseinheit, welche ausgebildet ist,
- ein distanzbasiertes Histogramm von
Punkten (P1.1 bis P1.m, P2.1 bis P2.j, P3.1 bis P3.k BP1 bis BPn) einer in der Lidarmessung erzeugten Punktewolke zu erstellen,
- in dem Histogramm Häufungen von Punkten (P1.1 bis P1.m, BP1 bis BPn) mit gleicher Distanz zu einem die Lidarmessung durchführenden Lidarsensor (1) zu identifizieren,
- Intensitäten der Punkte (P1.1 bis P1.m, BP1 bis BPn) einer Häufung auszuwerten, und
- dann, wenn die Häufung Punkte (P1.1 bis P1.m) enthält, deren Intensitäten einen vorgegebenen Grenzwert jeweils überschreiten, diejenigen Punkte (BP1 bis BPn) der Häufung, deren Intensitäten den vorgegebenen Grenzwert jeweils um mehr als einen vorgegebenen Schwellwert unterschreiten, als Blooming-Kandidaten zu klassifizieren.

7. Vorrichtung nach Anspruch 6,
**dadurch gekennzeichnet, dass** die Verarbeitungseinheit ausgebildet ist, diejenigen Punkte (P1.1 bis P1.m) der Häufung, deren Intensitäten den vorgegebenen Grenzwert jeweils überschreiten, als hochreflektive Messwerte, insbesondere als richtig-positive Messwerte, zu klassifizieren.

8. Vorrichtung nach Anspruch 6 oder 7,
**dadurch gekennzeichnet, dass** der Lidarsensor (1) zumindest einen rasterbasierten Empfänger umfasst.

9. Verwendung eines Verfahrens nach einem der Ansprüche 1 bis 5 während eines Betriebs eines automatisiert, insbesondere hochautomatisiert oder autonom betreibbaren Fahrzeugs oder Roboters, wobei eine Steuerung des Fahrzeugs oder Roboters anhand von in Lidarmessungen erfassten Daten durchgeführt wird und bei der Durchführung mittels des Verfahrens nach einem der Ansprüche 1 bis 4 als Blooming-Kandidaten klassifizierte Punkte (BP1 bis BPn) berücksichtigt werden.

## Claims

1. Method for identifying blooming candidates in a lidar measurement,
**characterized in that**
- a distance-based histogram of
points (P1.1 to P1.m, P2.1 to P2.j, P3.1 to P3.k, BP1 to BPn) of a point cloud generated in the lidar measurement is created,
- in the histogram clusters of points (P1.1 to P1.m, BP1 to BPn) with the same distance to a lidar sensor (1) performing the lidar measurement are identified,
- intensities of the points (P1.1 to P1.m, BP1 to BPn) in a cluster are evaluated, and
- if the cluster contains points (P1.1 to P1.m) whose intensities each exceed a predefined limit value, those points (BP1 to BPn) in the cluster whose intensities fall below the predefined limit value in each case by more than a predefined threshold value are classified as blooming candidates.

2. Method according to Claim 1,
**characterized in that** those points (P1.1 to P1.m) in the cluster whose intensities each exceed the predefined limit value are classified as highly reflective measured values, in particular as true-positive measured values.

3. Method according to one of the preceding claims, **characterized in that**, in order to generate the point cloud,
- linear laser pulses and/or rectangular laser pulses are emitted by means of a transmitter of the lidar sensor (1),
- for each laser pulse which is reflected at an object (O1 to O3) and hits a receiver of the lidar sensor (1), a
point (P1.1 to P1.m, P2.1 to P2.j, P3.1 to P3.k, BP1 to BPn) in the point cloud is generated,
- for determining a distance to objects (O1 to O3) in an environment of the lidar sensor (1), a time until a reflected laser pulse hits a receiver of the lidar sensor (1) is recorded, and
- each point (P1.1 to P1.m, P2.1 to P2.j, P3.1 to P3.k, BP1 to BPn) is assigned a value of a determined distance.

4. Method according to Claim 3,
**characterized in that** the laser pulses are used to scan the environment in rows or columns and/or in a manner divided into a plurality of sub-regions.

5. Method according to one of the preceding claims, **characterized in that** the environment of the lidar sensor (1) is divided into a plurality of sub-regions and at least one distance-based histogram of points (P1.1 to P1.m, P2.1 to P2.j, P3.1 to P3.k, BP1 to BPn) of a point cloud generated in the lidar measurement is created for each sub-region.

6. Device for identifying blooming candidates in a lidar measurement, **characterized by** a processing unit which is designed
- to create a distance-based histogram of points (P1.1 to P1.m, P2.1 to P2.j, P3.1 to P3.k, BP1 to BPn) of a point cloud generated in the lidar measurement,
- to identify in the histogram clusters of points (P1.1 to P1.m, BP1 to BPn) with the same distance to a lidar sensor (1) performing the lidar measurement,
- to evaluate intensities of the points (P1.1 to P1.m, BP1 to BPn) in a cluster, and
- if the cluster contains points (P1.1 to P1.m) whose intensities each exceed a predefined limit value, to classify those points (BP1 to BPn) in the cluster whose intensities fall below the predefined limit value in each case by more than a predefined threshold value as blooming candidates.

7. Device according to Claim 6,
**characterized in that** the processing unit is designed to classify those points (P1.1 to P1.m) in the cluster whose intensities each exceed the predefined limit value as highly reflective measured values, in particular as true-positive measured values.

8. Device according to Claim 6 or 7,
**characterized in that** the lidar sensor (1) comprises at least one grid-based receiver.

9. Use of a method according to one of Claims 1 to 5 during operation of a vehicle or robot which is operable in an automated, in particular highly automated or autonomous, manner, wherein the vehicle or robot is controlled on the basis of data captured in lidar measurements and, during the implementation by means of the method according to one of Claims 1 to 4, points (BP1 to BPn) classified as blooming candidates are taken into account.

## Revendications

1. Procédé de reconnaissance de candidats à l'hyperluminosité dans une mesure lidar,
**caractérisé en ce que**
- un histogramme basé sur la distance de points (P1.1 à P1.m, P2.1 à P2.j, P3.1 à P3.k, BP1 à BPn) d'un nuage de points généré dans la mesure lidar est créé,
- les accumulations de points (P1.1 à P1.m, BP1 à BPn) situées à la même distance d'un capteur lidar (1) qui effectue la mesure lidar sont identifiées dans l'histogramme,
- les intensités des points (P1.1 à P1.m, BP1 à BPn) d'une accumulation sont évaluées, et
- si l'accumulation contient des points (P1.1 à P1.m) dont les intensités dépassent respectivement une valeur limite prédéfinie, alors les points (BP1 à BPn) de l'accumulation dont les intensités sont respectivement au-dessous de la valeur limite prédéfinie de plus d'une valeur de seuil prédéfinie sont classés comme candidats à l'hyperluminosité.

2. Procédé selon la revendication 1,
**caractérisé en ce que** les points (P1.1 à P1.m) de l'accumulation dont les intensités dépassent respectivement la valeur limite prédéfinie sont classés comme valeurs de mesure hautement réfléchissantes, en particulier comme valeurs de mesure vraiment positives.

3. Procédé selon l'une des revendications précédentes, **caractérisé en ce que** pour générer le nuage de points
- des impulsions laser linéaires et/ou rectangulaires sont émises au moyen d'un émetteur du capteur lidar (1),
- pour chaque impulsion laser réfléchie sur un objet (O1 à O3), laquelle est incidente sur un récepteur du capteur lidar (1)
le point (P1.1 à P1.m, P2.1 à P2.j, P3.1 à P3.k, BP1 à BPn) est généré dans le nuage de points,
- un temps jusqu'à ce qu'une impulsion laser réfléchie soit incidente sur un récepteur du capteur lidar (1) est détecté afin de déterminer une distance par rapport aux objets (O1 à O3) dans un environnement du capteur lidar (1), et
- une valeur de distance déterminée est associée à chaque point (P1.1 à P1.m, P2.1 à P2.j, P3.1 à P3.k, BP1 à BPn).

4. Procédé selon la revendication 3,
**caractérisé en ce que** l'environnement est balayé au moyen des impulsions laser sous forme de lignes, de colonnes et/ou divisé en plusieurs zones partielles.

5. Procédé selon l'une des revendications précédentes, **caractérisé en ce que** l'environnement du capteur lidar (1) est divisé en plusieurs zones partielles et au moins un histogramme de points (P1.1 à P1.m, P2.1 à P2.j, P3.1 à P3.k, BP1 à BPn) basé sur la distance d'un nuage de points généré dans la mesure lidar est créé pour chaque zone partielle.

6. Dispositif de reconnaissance de candidats à l'hyperluminosité dans une mesure lidar, **caractérisé par** une unité de traitement, laquelle est configurée pour
- un histogramme basé sur la distance de points (P1.1 à P1.m, P2.1 à P2.j, P3.1 à P3.k, BP1 à BPn) d'un nuage de points généré dans la mesure lidar,
- identifier dans l'histogramme les accumulations de points (P1.1 à P1.m, BP1 à BPn) situées à la même distance d'un capteur lidar (1) qui effectue la mesure lidar,
- évaluer les intensités des points (P1.1 à P1.m, BP1 à BPn) d'une accumulation, et
- si l'accumulation contient des points (P1.1 à P1.m) dont les intensités dépassent respectivement une valeur limite prédéfinie, alors classer les points (BP1 à BPn) de l'accumulation dont les intensités sont respectivement au-dessous de la valeur limite prédéfinie de plus d'une valeur de seuil prédéfinie comme candidats à l'hyperluminosité.

7. Dispositif selon la revendication 6,
**caractérisé en ce que** l'unité de traitement est configurée pour classer les points (P1.1 à P1.m) de l'accumulation dont les intensités dépassent respectivement la valeur limite prédéfinie en tant que valeurs de mesure hautement réfléchissantes, en particulier en tant que valeurs de mesure vraiment positives.

8. Dispositif selon la revendication 6 ou 7, **caractérisé en ce que** le capteur lidar (1) comprend au moins un récepteur à balayage.

9. Utilisation d'un procédé selon l'une des revendications 1 à 5 lors du fonctionnement d'un véhicule ou d'un robot automatisé, en particulier hautement automatisé ou fonctionnant de manière autonome, une commande du véhicule ou du robot étant réalisée à l'aide de données acquises dans des mesures lidar et des points (BP1 à BPn) classés comme candidats à l'hyperluminosité étant pris en compte lors de la réalisation au moyen du procédé selon l'une des revendications 1 à 4.
